(19) Europäisches Patentamt
European Patent Office
Office européen des brevets

(11) Publication number : 0 222 340 B1

(12) **EUROPEAN PATENT SPECIFICATION**

(45) Date of publication of patent specification : 30.01.91 Bulletin 91/05

(51) Int. Cl.$^5$ : B61D 27/00, F24F 13/00

(21) Application number : 86115451.6

(22) Date of filing : 07.11.86

(54) **Method of air-conditioning and system for the same.**

(30) Priority : 11.11.85 JP 250772/85

(43) Date of publication of application : 20.05.87 Bulletin 87/21

(45) Publication of the grant of the patent : 30.01.91 Bulletin 91/05

(84) Designated Contracting States : DE FR

(56) References cited :
EP-A- 0 115 059
FR-A- 2 464 840
US-A- 3 645 193
US-A- 4 007 673

(73) Proprietor : HITACHI, LTD.
6, Kanda Surugadai 4-chome
Chiyoda-ku, Tokyo 100 (JP)

(72) Inventor : Yoneda, Yoshiyuki
210, Motoyoshida-cho
Mito-shi Ibaraki-ken (JP)
Inventor : Gotoh, Tadashi
1-17-24, Ishinazaka-cho
Hitachi-shi Ibaraki-ken (JP)
Inventor : Yamakawa, Masanori
5-15-10, Kanesawa-cho
Hitachi-shi Ibaraki-ken (JP)
Inventor : Matsumoto, Masakazu
Suemitsu Apt. 5-47, Nishitoyoi
Kudamatsu-shi Yamaguchi-ken (JP)
Inventor : Yamamoto, Hisashi
2920-127, Mawatari
Katsuta-shi Ibaraki-ken (JP)

(74) Representative : Patentanwälte Beetz sen. - Beetz jun. Timpe - Siegfried - Schmitt-Fumian
Steinsdorfstrasse 10
D-8000 München 22 (DE)

EP 0 222 340 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

### BACKGROUND OF THE INVENTION

The present invention relates to a method of air-conditioning spaces of large dimensions such as railroad cars or the interior of theaters or large-size refrigerators and to a system for performing said method.

With a conventional air-conditioning system for railroad cars ten or eleven small air conditioners are disposed and mounted on the ceiling of the passenger accommodation of a train car along the longitudinal direction thereof. Each air conditioner has four air outlets and four air inlets disposed in the car ceiling. When that air-conditioning system is operating to cool the passenger accommodation, cooled air is blown in through each outlet to the center of the passenger accommodation so as to cool it, and the air from that space thereafter is drawn in through corresponding air inlets. Thus, as viewed in the transverse direction of the car, two circulating flows of air are generated. The position of each of said circulating flows is fixed, and the wind velocity generally decreases as the flow of air approaches to the flow circulation center. The passenger seat head height is about half the height of the passenger accommodation space, and at the seat nearest to the center of the circulating flow the wind velocity is smaller than it is at other seats. Thus, the air-conditioning effect is reduced at that position making the corresponding passenger feel uncomfortable. Moreover, there are some regions which the circulation flows fail to reach at all. Particularly, an excessively cooler layer of air stagnates in the vicinity of the car floor in the central regions, and a cold atmosphere tends to form there. Therefore, it is impossible to obtain a uniform temperature distribution throughout the whole passenger accommodation and to assure pleasant conditions for every passenger. An example for an air-condioning system of that kind is described in JP-A-192663/1984.

Further, EP-A-0 115 059 describes a system for air-conditioning a railway car which comprises means for forming a pair of continuously colliding circulating flows of air which are generated by wind blown out through air outlets disposed at predetermined separated positions in that railway car. Also with that system, however, the vortex flows produced remain at fixed positions such that the drawbacks explained above also apply to that other known system.

Finally, FR-A-2 464 840 discloses an air-conditioning device for a motor car employing means for adjusting the angle between wind deflection plates in mutually opposite directions so as to make the wind flows blown out after impingement against the several deflection plates temporarily impinge against each other immediately after they have been blown out and are about to form a pair of vortex flows. Since, however, the wind deflection plates continuously rotate with rotary shafts forming their centers of rotation, the two wind flows of the pair are separated from each other and their impingement status occurs and lasts temporarily only. Maintaining a pair of vortices in consecution to each other is not possible with the said known system.

### SUMMARY OF THE INVENTION

It is an object of the present invention to improve the uniformity of the temperature distribution in a space to be air-conditioned as well as the air-conditioning efficiency through maintaining a plurality of vortices or circulating flows of air in a status of continuously colliding with each other in the space to be air-conditioned.

The said object is achieved by means of an air-conditioning method and system as indicated in the appending claims 1 and 4, respectively, further developments of the present invention both as to the said method and as to the said system being disclosed in related subclaims.

The basic principle of the present invention is formed by the idea of successively repeating two steps: A first step of changing the effective dimensions or parameters of at least one of the circulating flows of air and a second step of returning that changed circulating flow or flows to the dimension or parameter present before the said first step.

In realizing that basic idea of the present invention the wind flows from a pair of mutually spaced-apart blast ports are made impinge against each other immediately after having been blown out and giving rise to a pair of vortices. The blasting directions of the said wind flows are kept within a vertical plane also including the pair of blast ports. Therefore, the pair of vortices can always be maintained without disappearance. The directions of the pair of blown-out wind flows are changed in the same sense while keeping the angle of mutual impinging or making control so as to differentiate the quantities of the blown-out wind flows, and that change or control operation is repeated. In this manner, one of the said pair of vortices becomes smaller while the other one becomes larger, and the next time the second vortex becomes smaller while the first one becomes larger, and those operations are repeated. If the diameters of the several vortices are mutually controlled in such a manner, the centers of the said vortices mutually reciprocate in the same direction. As a result, a stay layer which might be formed adjacent to the floor or ceiling of the space to be air-conditioned can be removed and staying of air at specific positions within the space to be air-conditioned can be prevented. Furthermore, since the pair of wind flows are caused to impinge against each other immediately after they have been blown out in a diagonally downward direction a stay layer on the floor can be eliminated. Due to the movement of the pair of vortices wind having periodically changing velocity can be blown to people or articles within the space to be air-conditioned which allows improving comfort to the people and cooling capacity to the articles.

## BRIEF DESCRIPTION OF THE DRAWINGS

Figs. 1(a), 1(b), 1(c) are elevational views of an embodiment of the present invention in which circulating flows in a space to be air-conditioned are represented by vectors ;
Fig. 2 shows graphs of periodical changes of the blowing angle and the flow rate of air currents blown through the air outlets shown in Figs. 1(a), 1(b) and 1(c) ;
Fig. 3 shows graphs of the flow velocity of the air current flowing around the head of a man in the states shown in Figs. 1(a), 1(b) and 1(c) ;
Fig. 4 is a block diagram of the functions of the system for generating the circulating flows of Figs. 1(a), 1(b) and 1(c) ;
Fig. 5 is a graph indicating preferable situations which enable the human body to feel coolness ;
Fig. 6 is a cross sectional view of the principle under : lying the function of a device in accordance with the present invention for specifically changing the angle component alone of the vector of air currents;
Fig. 7 is an elevational view of a system for changing the direction of air currents by employing the device of Fig. 6 ;
Fig. 8 is an elevational view of a detail of portions 25a and 25b shown in Fig. 7 ;
Fig. 9 shows graphs of the internal pressures of the portions 25a and 25b shown in Fig. 7 ;
Fig. 10 is an elevational view of a device in accordance with the present invention for changing both the wind velocity and angle components of the vector of air currents ;
Fig. 11 is an elevational view of a detail of the structure of a portion 33a shown in Fig. 10 ;
Fig. 12 is a circuit block diagram of an example of a portion 22a shown in Fig. 10 ;
Figs. 13(a), 13(b) and 13(c) are elevational views of another embodiment of the present invention in which the change of each of the circulating flows in a theater are observed respectively in the states (a), (b) and (c) ;
Fig. 14 is an elevational view of still another embodiment of the present invention showing circulating flows of air currents in the passenger accommodation of a railroad car ;
Fig. 15 is an elevational view of circulating flows observed after the circulating flows of Fig. 14 undergo changes ;
Fig. 16 shows graphs of periodical changes of the blow angle and the flow rate of air currents blown through the air outlets shown in Figs. 14 and 15 ; and
Fig. 17 shows graphs of the horizontal distribution of wind velocity at a certain height in the spaces shown in Figs. 14 and 15.

## DESCRIPTION OF THE PREFERRED EMBODIMENTS

The present invention will be described in detail with respect to the preferred embodiments thereof.

Fig. 1(a), 1(b) and 1(c) show one embodiment of the present invention. As shown in Fig. 1(a), outlets $2_{C1-4}$ and inlets $3_{C1-4}$ of air conditioners 1 are formed on a ceiling 1a of a space to be air-conditioned, and outlets $2_{F1-4}$ and inlets $3_{F1-4}$ of the air conditioner 1 are formed on the floor 16. The anble of a flow of air blown through each of the outlets $2_{C1-4}$ and $2_{F1-4}$ is set at 45° below the horizontal. The flow rate and velocity of the air flow blown through each of the ceiling outlets $2_{C1-4}$ are assumed to be larger than those of the air flow blown through each of the floor outlets $2_{FL-4}$. In the air-conditioned space, flows of air blown through the outlets $2_{C1}$ and $2_{C2}$ of the ceiling 1a form circulating flows $A_1$ and $A_2$ while colliding against each other, as shown in Fig. 1(a). Similarly, other flows of air blown through the outlets $2_{C3}$ and $2_{C4}$ of the ceiling 1a form circulating flows $A_3$ and $A_4$ while colliding against each other. On the other hand, circulating flows $B_1$ and $B_2$ are formed by the combination of flows blown through the outlets $2_{F1}$ and $2_{F2}$ of the floor 16, and circulating flows $B_3$ and $B_4$ are formed by the combination of flows blown through the floor outlets $2_{F3}$ and $2_{F4}$. The position of the resident or a spectator's head is assumed to be at a height h, as indicated in Fig. 1. Figs. 1(b) and 1(c) show the flows of air in the air-conditioned space while the flow rate, velocity and angle of each of flows blown through the ceiling outlets $2_{C1-4}$ and the floor outlets $2_{F1-4}$. The size of each of the circulating flows $A_{1\sim4}$ and $B_{1\sim4}$ differs in relation to the respective states of the air flows, as shown in Figs. 1(a), 1(b) and 1(c). In particular, the value of the wind velocity at the height h of the position of the resident or spectator's head varies relatively largely with respect to these states.

Fig. 2 shows an example of the regulation of the angle and flow rate (flow speed) at each outlet, in which $\tau$ expresses the regulating period.

Fig. 3 shows the flow velocity value measured in the position corresponding to the resident or spectator's head (at the height h from the floor 1b) on a vertical sectional plane of the air-conditioned space. If the space is that of a theater, the wind velocity value indicated in Fig. 3 is of the position of the spectator's head parallel to the stage. Each portion of the graph indicating the minimum value of the wind velocity corresponds to the center of each circulating flow. When the angle and flow rate of each wind blowing are changed, the position of the minimum value of the wind velocity is shifted. At a position P in Fig. 3, for instance, Figs. 3(a), 3(b) and 3(c) indicates different wind velocity values. In other words, comfortableness for the spectators can be improved by changing the wind velocity value at the heads of the spectators in relation to time. A similar effect is observed in the case of a swing-head fan which supplies a wind with varying intensities.

Fig. 4 shows a control block diagram at the time of a cooling operation, including an outlet flow rate controller 23, outlet flow angle controller 24, blower 8, cooler 7, outlet flow rate regulator 27, outlet flow angle regulator 28, outlets $2_{C1\sim4}$, and inlets $3_{C1\sim4}$. Other constituents and the functions are as follows. A regulation period generator 22 is designed to change its output period in accordance with the output of a temperature comparator 21. That is, the regulation period generator 22 supplies an output of a short period, when the difference between the temperatures measured by a ceiling temperature detector 18 and a floor temperature detector 19 becomes larger than a predetermined value of a temperature setting device 20.

The blower 8 supplies a volume of air, which has been inhailed through the inlets $3_{C1\sim4}$ of the system regulator, to a cooler. The air thereby cooled is distributed by the outlet flow rate regulator 27 to two outlets $2_{C1,\ C2}$. This distributed flows of air are blown at certain angles from the horizontal through the two outlets $2_{C1,\ C2}$ to the interior of the space to be cooled. The control of the flow rate distribution between these two outlets is periodically effected by the outlet flow rate controller 23 and the outlet flow angle controller 24. The outlet flow angles at these two portions are periodically changed by the outlet angle controller 24 and the regulation period generator 22. With respect to the outlets $2_{C3,\ C4}$, air flows are similarly controlled.

Fig. 5 shows a relationship between the outlet flow angle and flow rate change period and the center point travel velocity of a circulating flow. The center point travel velocity of the circulating flow exhibits a characteristic such as expressed by the solid line of Fig. 5, when the outlet flow angle and flow rate regulation period $\tau$ is changed. In the region indicated by the broken lines in Fig. 5, the time lag is increased even when the outlet flow angle and the flow rate period are changed. An changing period of the wind velocity value of ensuring comfortableness at the head position of a seat is in a range of several seconds to several tens of seconds, as observed in the case of a swing-head fan. Accordingly, the outlet flow angle and flow rate regulation period is set within a comfortable period range of several seconds and several tens of seconds (in a hatched area of Fig. 5).

Fig. 10 shows an example of a device which periodically controls the flow angle and the flow rate at each outlet. Reference numerals 30 and 31 designate a diaphragm and a flip-flop pure fluid control device. The diaphragm 30 is driven by a diaphragm driver 35 so that the pressures $P_1$ and $P_2$ are changed. In accordance with these changes, the pressures at control ports A and B of the flip-flop 31 are changed. These changes of the output of the diaphragm driver 35 are effected in accordance with the output of a control circuit 22a. This control circuit 22a and another control circuit 22b are also connected to drivers 33a and 33b for outlet conduits 32a and 32b. A pump 36 draws the interior air and supplies this air in the form of proportioned flows to nozzles 34a and 34b in the outlet conduits 32a and 32b. The proportioned flows of air give momentums to the internal air of the outlet conduits 32a and 32b so as to form flows therein, as they are jetted from the nozzles 34a and 34b in the outlet conduits 32a and 32b. Each of the flows in the conduits 32a and 32b is cooled by the cooler 7. The flow rate values in the conduits 32a and 32b are determined by those of the flows in the nozzles 34a and 34b. The flow angles at the outlets $2_{C1}$ and $2_{C2}$ are periodically changed by the control circuits 22a and 22b and the outlet conduit drivers 33a and 33b. The output generation periods of the regulation period generators 22a and 22b are shifted from each other by a half period in order to effect changes of the outlet flow angle periods.

The arrangements of the drivers 33a and 33b are such as shown in Fig. 11. The conduit 32a is rotatably supported by a rotational shaft 41 mounted on the ceiling 1a. A rod 43 on which racks 42 are formed is connected to the conduit 32a by a rotational shaft 44. This rod 43 is pinched by two gears 44a and 44b engaging with the racks 42 while preventing the disengagement thereof. The gear 44b engages with a gear 45 which engages with a gear 48 fixed to a rotational shaft 47 of the electric motor 46. The electric motor 46 is mounted on the ceiling 1a, and the gears 44a, 44b and 45 are disposed on a frame 49 which is secured on the ceiling 1a. As shown in Fig. 11, the rotational shaft 44 passes through an elongated aperture 50, thereby preventing an excessive bending force for the rod 43 during the rotational movement of the conduit 32a about the rotational shaft 41.

The arrangement of the control circuit 22a is such as shown in Fig. 12. The output of the temperature detector 18 disposed as shown in Fig. 12 is amplified by the amplifiers 52a and 52b. The outputs of the amplifiers 52a and 52b undergo subtractions of the subtracter 53 so as to supply an output corresponding to the temperature difference. The output of the subtracter 53 undergoes subtraction with the output of a temperature setting device 55 through a subtracter 54, thereby putting out the differential output of the temperature setting device 55 and the subtracter 53. The output of the subtracter 54 is supplied to a differentiation circuit 56 which detects whether this value is larger or smaller than a value which was supplied a unitary time before. When the present value is larger, the differentiation circuit 56 puts out a positive signal. When the present value is smaller, the circuit 56 puts out a negative signal. If a positive signal is put out by the differentiation circuit 56, it is supplied to two comparators 57a and 57b. Since the comparator 57a is adapted for reacting to positive input signals while the other comparator 57b reacts to negative signals, the comparator 57a alone reacts in this case, and operates a normal rotation control circuit 58a so as to rotatingly drive the motor 46 in the normal direction. If a negative signal is put out by the differentiation circuit 56, the comparator 57b reacts to operate a reverse rotation control circuit 58b, thereby rotatingly driving the motor 46 in the reverse direction.

When the motor rotates in the normal direction, the rotational force of the motor 46 is transmitted to gears 48, 45 and 44b so as to linearly retract the rack 42 to the left hand side of Fig. 11, thereby rotating the conduit 32a about the rotational shaft in the leftward direction, as viewed in Fig. 11. When the motor rotates in the reverse direction, it makes the rack 42 porject to the right hand side, thereby rotating the conduit 32a in the rightward direction.

Thus, the conduit 32 is swung from side to side in accordance with the difference between the temperatures on the floor and ceiling sides, and the direction of the outlet $2_{C1}$ is thereby changed so as to move the stagnating layers of air on the floor and ceiling sides leftwardly and rightwardly while reducing the sizes of the same.

The diaphragm driver 35 is constituted by utilizing the almost entire construction of the driver shown in Fig. 11, and the movement of the rod 43 of Fig. 11 is changed into the up-and-down movement of a diaphragm plate 59 of the diaphragm 30.

The control circuit 22a for the diaphragm driver 35 is the same as that shown in Fig. 12. When the diaphragm plate 59 is moved down by the control operation of this controller 22a, the pressure on the $P_1$ side is increased and the pressure on the $P_2$ side is decreased. When, in this state, the liquid introduced from the blower 8 into the flip-flop pure fluid control device 31, a larger amount of air from the blower 8 is distributed to the nozzle 34b, so that the flow rate is set to be large at the outlet $2_{C2}$ and small at the outlet $2_{C1}$.Conversely, when the diaphragm is moved up, the relationship between the pressure levels at the ports A and B is reversed, so that the flow rate is small at the outlet $2_{C2}$ and large at the outlet $2_{C1}$.

The conduit 32b and the driver 33b shown in Fig. 10 is symmetrically arranged relative to the conduit 32a and the driver 33a. In order to provide such sizes and dispositions of vortices as indicated in Figs. 1(a), 1(b) and 1(c), it is necessary to rotate the conduit 32b leftwardly in accordance with the leftward rotation of the conduit 32a. To achieve this related rotation, the drivers 33a and 33b are arranged and disposed symmetrically. The control circuit 22a for the driver 33b is the same as that shown in Fig. 12. The period of leftward and rightward swinging movements of the conduits 32a and 32b or the period of the change of the relationship between the flow rate at the outlets $2_{C1}$ and $2_{C1}$ may be altered by changing the output of the temperature setting device 55. These periods may be depend upon the cooling or heating capacity of the air-conditioning system relative to the interior space.

The present invention has been described with respect to the arrangements in which both the flow rate and angle of an outlet flow are regulated, but it is possible to change the flow rate of the outlet flow angle alone, thereby changing the size of vortices and moving the center of each vortex.

Examples in accordance with the present invention which changes the output flow angle alone will be described below.

Fig. 6 shows a deflection characteristic observed when a jet flow is formed by employing a pure flow control device. When, as shown in Fig. 6, a main jet flow having a momentum $J_s$ assumed to collide against control flows having momentums $J_{lr}$ and $J_{l\ell}$, thereafter having a momentum $J_o$, the following equations are obtained by vectorial operations.

$$J_s = J_o \cos\theta$$

$$\theta = \tan^{-1} \frac{J_{i\ell} - J_{ir}}{J_s}$$

The deflection angle θ by which the main jet flow is deflected can be obtained from these equations.

Fig. 7 shows still another embodiment of the present invention which employs a pure fluid control device to periodically control the outlet flow angle at two outlets. A load oscillator 29 has capacities Cℓ25a, Cr25b and load resistances Rℓ26a, Rr26b. The capacities Cℓ25a and Cr25b respectively represent space volumes, and the load resistances Rℓ26a and Rr26b represent, for example, orifices. Fig. 8 shows the output characteristics of the load oscillator 29. When, for example, the air flows while being attached to the left side, the flow of air issues after passing through the capacity Cℓ25a and the resistance Rℓ26a. The internal pressure of the capacity cℓ25a is increased by the difference between the flow rate of a flow entering from the output port of the device and the flow rate of the flow issuing through the orifice. When the pressure is increased to a limit whereby the attached flow is maintained, the flow is switched to the right. After is has switched, a similar pressure builup is effected with respect to the right capacity Cr25b. Meanwhile, the internal pressure of the left capacity Cℓ25a is decreased. The pressure wave forms in the left and right cavities are such as shown in Fig. 9. When these pressure wave forms are employed, the down stream flows relative to the capacities Cℓ25a and Cr25b, namely, momentums exhibit variations corresponding to these pressure wave forms, so that these momentums can be utilized as control momentums $J_{i\ell}$ and $J_{ir}$, as shown in Figs. 6 and 7. That is, at the outlets $2_{C1}$ and $2_{C2}$ in the arrangement shown in Fig. 7, the main jet flows are deflected by the control momentums $J_{i\ell}$ and $J_{ir}$ directly coupled with the outputs of the load oscillator. Each main jet flow is deflected in accordance with the period of the pressure wave form such as shown in Fig. 9.

The regulation of the periods shown in the graphs of Fig. 9 is effected by moving pistons 61a and 61b in the chambers and changing the volume of each chamber. Fig. 8 shows the piston 61a and 61b and drivers 6sa and 62b for the pistons 61a and 61b. As shown in this figure, the driver 62a has the same construction as that of the driver of Fig. 11, and the structure and disposition of the drivers 62a and 62b exhibit an axial symmetry.

A control circuit for controlling the motor 46 of the driver 62a is the same as that shown in Fig. 12. If the temperature difference between the temperatures on the ceiling and floor sides largely differs from a temperature set by the temperature setting device 55, the control circuit judges whether or not the former is approaching the latter, by using the differentiation circuit 56, thereafter rotating the motor 46 in the normal or reverse direction. When the motor 46 of the driver 62a rotates in the normal direction, the rod 43 of the driver 62a is retracted to the left hand side in Fig. 8 and the piston 61a is thereby moved left so that the capacity Cℓ25a is increased. When the motor 46 rotates in the reverse direction, the capacity Cℓ25a is reduced.

A control circuit for controlling the motor 46 of the driver 62b has the same arrangement as that shown in Fig. 12 but includes an additional constituent, namely, a signal inverter for inverting the polarity of a signal which is inserted between the differentiation circuit 56 and the comparators 57a and 57b. By employing such a circuit with a signal inverter as a control circuit for controlling the motor 46 of the driver 62b, it is possible to provide a relationship between the rotations of the motors 46 of the drivers 62a and 62b such that the motor 46 of the driver 62a rotates in the normal direction while the motor 46 of the driver 62a rotates in the reverse direction, and the former rotates in the reverse direction while the latter rotates in the normal direction.

Therefore, when the piston 61a is moved to the left hand side, the piston 61b is reversely moved to the right hand side so that the capacity Cℓ25a increases and the capacity Cr25b simultaneously increases by the same amount. Conversely, when the capacity Cℓ25a decreases, the capacity Cr25b also decreases.

When the capacities Cℓ25a and Cr25b are increased, the period indicated in Fig. 9 is thereby increased. When the capacities are decreased, the period is decreased. To further effect a change of this period, the temperature setting of the temperature setting device shown in Fig. 28 may be altered.

This arrangement enables the outlet flow angles (θ) of the outlet $2_{C1}$ and $2_{C2}$ to be changed periodically, thereby effecting the periodical transference of vortices and the change of sizes of the same.

If it is desirable to change the air flow rate in the arrangement of Fig. 7, a flow rate regulating valve may be disposed at an intermediate portion of the passage for each main jet flow, the valve opening thereof being regulated as desired. The regulation of the valve opening may be carried out in such a manner that the flow passage for one of the main jet flows led to the outlet for generating a smaller vortex is throttled to an extent greater than the other main jet flow led to the outlet for generating a larger vortex.

For the regulation of the outlet flow angle and flow rate, means other than the pure fluid control devices, namely, louvers, for example, may be mechanically rotated so as to change the outlet flow angle while regulating the outlet flow rate by the valve adjustment.

Fig. 13 shows the cooling operation of a air-conditioning system for a theater embodying the present invention. Reference numerals 9 and 5 respectively denote air ducts and audience seats. This embodiment arranges the floor outlets $2_{F1\text{-}4}$ in positions different form those in the embodiment shown in Fig. 1. Each air duct 9 having the floor outlet $2_{F1}$ and the floor inlet $3_{F2}$ is adjacent to the audience seats. In the arrangement shown in Fig. 13, the flow angle and flow rate at each of the ceiling outlets $2_{C1\text{-}C4}$ are changed in accordance with the graph of Fig. 2, but, in this case, it is not necessary to change the flow angles at the floor outlets $2_{F1\text{-}F4}$, and the angle thereof is set at 45° below the horizontal. The flow rate at each of the floor outlets $2_{F1\text{-}F4}$ is changed in accordance with the graph of Fig. 2. Basically, this arrangement generates circulating flows $A_1$ to $A_4$ and $B_1$ to $B_4$ similar to those shown in Fig. 1. As shown in Figs. 13(b) and 13(c), the size and the center position of each circulating flow are changed by altering the flow angle and flow rate at the ceiling outlets $2_{C1\text{-}C4}$ and the flow rate at the floor outlets $2_{F1\text{-}F4}$. Values of the flow velocity measured at the head position on the audience seats (at a height h from the floor) are substantially the same as those shown in Fig. 3. The audience can feel comfortable as the flow velocity changes.

In order to realize the flow pattern shown in Fig. 13, the flow angles and the flow rates at the ceiling outlets $2_{C1}$ and $2_{C2}$, $2_{C3}$ and $2_{C4}$ can be controlled by the embodiment shown in Fig. 10. In this case, it is not necessary to carry out the angle control for the floor outlets $2_{F1\text{-}F4}$ and, therefore, the conduit drivers such as those provided in the embodiment shown in Fig. 10. However, the pattern can be realized by the arrangement shown in Fig. 10.

Fig. 13 specifically illustrates a flow pattern in a vertical cross section of a theater, but the present invention is also applicable when the ceiling is horizontal ; and the floor is stepped ; and the height H of the ceiling from the floor is small. By changing the flow rate at the ceiling outlets $2_{C1\text{-}C4}$, the sizes of the circulating flows $A_{1\text{-}4}$ can be changed while fixing the sizes of the circulating flows $B_{1\text{-}4}$, thereby maintaining the comfortableness. The height H of the ceiling on ordinary second floor audience seats is small. In that case, air-cooling may be effected by employing only the circulating flows $A_{1\text{-}4}$ shown in Fig. 13, and the floor outlets $2_{F1\text{-}F4}$ are not necessary.

The cooling operation of an air-conditioning system for a train passenger car, namely, a mobile space for passengers will be described below. Figs. 14 and 15 show in transverse cross section a passenger accommodation of the train passenger car. Since the distance between the ceiling and the floor in the passenger car is small along with the width thereof compared with those of theaters, it is sufficient to provide two ceiling outlets $2_{C1}$ and $2_{C2}$. The inlets $3_{F1,2}$ are formed in the vicinity of the floor.

In this embodiment, air is blown through the outlets $2_{C1,\,2}$ on the side of the ceiling 1a so as to form two flows both flowing in the directions toward the aisle. The blowing angle of the outlet $2_{C1}$ of Fig. 12 is $\theta_1$ below the horizontal, and the angle of the outlet $2_{C2}$ is only $\theta_1'$. The air flow distribution in the transverse direction of the train car in this arrangement was obtained by an analysis program for analyzing flows of an incompressible and viscous fluid. This analysis program is used to calculate the formula of conservation of mass, momentum and energy with respect to an incompressible and viscous fluid on the basis of the finite difference method. The calculation was performed by assuming that the outlet flow velocity is 2 m/s ; the outlet temperature is 7°C ; the ambient air temperature is 30°C ; and the outlet flow rates at two outlets are the same. As a result, it was confirmed that two circulating flows having different sizes were generated, as shown in Figs. 14 and 15. The flow velocity at the approximate head position on each seat (head position of a sitting passenger) in this embodiment is different from that provided by conventional methods. In the state illustrated in Fig. 14, a cold atmosphere region 11 occurs near the floor surface 1b if the outlet flow angle as indicated in this figure is maintained.

The results of this calculation obtained when the angles of the outlets $2_{C1}$ and $2_{C2}$ are changed are such as shown in Fig. 15. That is, larger circulating flows are formed on the side of the three adjacent seats and a smaller circulating flows are formed on the side of the two adjacent seats. This relationship is reverse to that shown in Fig. 14. As the outlet flow angles are changed, the centers of the two circulating flows occurring in the transverse direction of the car are moved in the horizontal and transverse direction, as is understood from the comparison between the results shown in Figs. 14 and 15. Moreover, the cold atmosphere region 11 generated in the vicinity of the floor as shown in Fig. 14 is destroyed or reduced by the effects of the movement of each circulating flow center and the change of each circulating flow size.

The outlet flow rates at the outlets $2_{C1}$ and $2_{C2}$ on the side of the ceiling 1a are the same in both cases as illustrated in Figs. 14 and 15, but circulating flows different in size can also be generated when the outlet flow rates, namely. Flow velocities at the outlets $2_{C1}$ and $2_{C2}$ are varied while setting the outlets $2_{C1}$ and $2_{C2}$

at the same angle. That is, larger circulating flows are formed in the space beneath the outlet through which air flows at a larger flow rate.

When, as in the case of this embodiment, the center of a circulating flow is located at the head position on a seat, the flow velocity may not change largely at the head position on some seats no matter how the size of the generated circulating flow may be. To prevent this problem, it is most effective to change the outlet angles while setting a higher air flow rate or flow velocity on the side of the outlet where a larger circulating flow occurs, thereby increasing the flow velocity at the head position on the seat.

Fig. 16 shows an example of regulation of the angle and flow rate at the two outlets $2_{C1}$ and $2_{C2}$, which sets a constant summation of these outlet angles of, for instance, 90°.

Fig. 17 shows the flow velocity distribution in the horizontal and transverse direction of the car at the head height of the passenger seat. In this figure, the solid line indicates the flow velocity value measured when the outlet angles of Figs. 12 and 13 are varied, and the broken line indicates the flow velocity value measured when the outlet flow angle and rate of Fig. 14 are varied simultaneously. If flow velocity distribution such as indicated by the broken line in Fig. 15 is provided, the flow velocity of the large diameter circulating flow at the head position on each seat in increased, and, simultaneously, the variations of the flow velocity effected by the movement of the circulating flow center are maintained. These variations of the flow velocity ensure the comfortableness for the passenger at the head position on the seat.

The embodiment shown in Figs. 14 to 17 has been described its cooling operation in the car. The heating operation in the car may be carried out by switching the cooler, which is shown in Fig. 4, into a heater, and the ceiling outlets $2_{C1}$ and $2_{C2}$ shown in Fig. 12 may be employed. For the heating in the car, heated air can be blown through the floor inlets $3_{F1}$ and $3_{F2}$ shown in Fig. 14 instead of the blowing through the outlets in the ceiling 1a. In this case, the direction of the rotation of each circulating flow occurring in the transverse direction of the car is reverse to that of the circulating flow indicated in Fig. 12. In the car heating operation, a hot atmosphere region is formed in the vicinity of the ceiling whether the air is blown from the side of the ceiling or from the side of the floor. Such a hot atmosphere region can be destroyed by the effect of the arrangement in accordance with the present, thereby achieving uniform temperature distribution in the passenger accommodation space.

In the embodiment shown in Figs. 14 to 17, during cooling or heating in the passenger accommodation, two circulating flows different in size are generated in the transverse direction of the car and the center of each circulating flow is moved so as to periodically changing the flow velocity at the passenger' head, thus improving the comfortableness for the passenger. The cold atmosphere region which tends to occur near the floor at the time of cooling and the hot atmosphere which tends to occur near the ceiling at the time of heating can be destroyed by moving the center of each of the above two circulating flows, so that uniform temperature distribution in the passenger accommodation can be achieved easily. Even when the temperature distribution is disturbed by the heat entering or going out during opening and closing movement of the entrance door of the passenger accommodation, the temperatures on the sides of the ceiling and the floor are detected and the outlet flow angle regulation period is reduced. It is thereby possible to destroy, in a short time, the cold atmosphere region near the floor or the hot atmosphere region near the ceiling. The temperature distribution in the passenger accommodation is thereby uniformized in a short time.

The air-conditioning system for the train passenger car has been described as an example of a cooling or heating operation in a mobile space for passengers. Other examples of mobile spaces for passengers include buses, airplanes, etc. Such mobile spaces have different seat numbers and arrangements, but the method of air-conditioning train passenger cars such as shown in Figs. 14 and 15 is also applicable to these cases.

When the present invention is applied to the cooling operation of a large cold storage, the cooling system thereof corresponds to the arrangement shown in Fig. 1 except for the floor outlets $2_{F1-F4}$. This system periodically changes the flow angle and flow rate at the ceiling outlets $2_{C1}$ and $2_{C2}$ in accordance with the graph of Fig. 2 so as to change the position of each cold air flow colliding with cold-storage goods. The thermal boundary layers on the cold-storage goods are thereby destroyed so that the cold-storage goods can be uniformly cooled. The size of each of the circulating flows $A_{1-4}$ is changed in accordance with the height of the cold-storage gocds. The corresponding flow rates at the outlets $2_{C1-C4}$ are regulated with a flow rate regulation valve. This arrangement is effective when applied to a cold storage for frequently taking in and out small packages.

It is also applicable to the thawing of frozen foods. It is possible to destroy the thermal boundary layers on the frozen foods and thaws the same in a short time by generating circulating flows and changing the size and the center position thereof.

If a pure fluid control device capable of readily controlling the outlet flow angle and the outlet flow rate in the three-dimensional directions, the flow velocity control in the direction of the head positions of audience in a theater exhibits variousness, thereby further improving the comfortableness. In all embodiments of the present invention, the generation of large and small vortices and the movement of the same can be achieved by employing the devices shown in Figs 7 and 10.

Each embodiment of the present invention can move, in a vertical sectional plane, the center of a plurality of circulating flows having different sizes, in cooling or heating operations in an very large space such as a theater or in a mobile space for passengers. Different temperature regions thereof which tend to stagnage near the floor of the ceiling can be eliminated in a short time. Thus, the control of air for providing uniform temperature distribution in an air-conditioned space can be effectively performed. In addition, it is possible to periodically change the flow velocity of the wind contacting the heads of audience or passengers, thereby making the audience or passengers feel more comfortable. In the arrangement of a large cold storage in accordance with the present invention, cold-storage goods can be uniformly cooled, thus saving energy. The invention also enables frozen food to be thawed speedily, when applied to the thawing of frozen foods.

According to the present invention, as described above, the center of each of a plurality of circulating flows is moved so as to eliminate unevenness of the temperature in an air-conditioned space, thereby improving the air-conditioning effects.

## Claims

1. A method of air-conditioning which in a space to be air-conditioned forms a plurality of continuously colliding circulating flows of air respectively blown through air outlets of an air-conditioning system disposed at predetermined separated positions within said space, characterised in that it comprises

– a first step of changing the diameter of at least one of said plurality of circulating flows while maintaining continual collision of said plurality of circulating flows and

– a second step of returning said at least one of said plurality of circulating flows as affected in said first step to its diameter present before said first step, said first step and said second step being successively repeated.

2. A method as claimed in claim 1, characterised in that during said first step the diameter of one of said plurality of circulating flows is changed to a larger or a smaller diameter relative to other ones of said plurality of circulating flows and that during said second step the relationship in diameter between said circulating flow changed in diameter during said first step and the other ones of said pluralitiy of circulating flows is reverted.

3. A method as claimed in claim 1 or 2, characterised in that during said first step the air flow rate and air flow angle of one of said plurality of circulating flows is changed in a first sense and the air flow rate and air flow angle of an adjacent one of said plurality of circulating flows is changed in a reverse sense and that during said second step the relationship in air flow rate and air flow angle between said circulating flows affected by said first step is reverted.

4. An air-conditioning system which in a space to be air-conditioned forms a plurality of continually colliding circulating flows of air respectively blown through air outlets disposed at predetermined separated positions within said space, characterised by

– first means (23, 24, 27) for changing the diameter of at least one of said plurality of circulating flows while maintaining continual collision of said plurality of circulating flows and for returning said at least one of said plurality of circulating flows changed in its diameter to its diameter present before said change and

– second means (22) for performing repetitions of the effects of said first means.

5. An air-conditioning system as claimed in claim 4, characterised by

– third means (22a) for changing the air flow rate and air flow angle of at least one of said plurality of circulating flows and for changing the air flow rate and air flow angle of an adjacent one of said plurality of circulating flows in a direction reverse to that of the change for said one of said plurality of circulating flows and

– fourth means for reversing said relationship between said adjacent circulating flows effected by said third means.

## Ansprüche

1. Verfahren zum Klimatisieren, bei dem in einem zu klimatisierenden Raum mehrere, kontinuierlich aneinander anstoßende Luftzirkulationen ausgebildet werden, wobei die Luft durch Luftauslässe des Klimatisierungssystems ausgeblasen wird, die innerhalb des Raumes an vorbestimmten und voneinander unterschiedenen Positionen angebracht sind, **gekennzeichnet** durch

– einen ersten Schritt des Wechselns des Durchmessers zumindest einer der mehreren Zirkulationen unter Aufrechterhaltung des kontinuierlichen Aneinanderstossens der mehreren Zirkulationen und

– einen zweiten Schritt des Wiedereinstellens des Durchmessers der zumindest einen in dem ersten Schritt beeinflußten Zirkulation auf den ursprünglichen, vor dem ersten Schritt vorhandenen Durchmesser, wobei der erste Schritt und der zweite Schritt hintereinander folgend wiederholt werden.

2. Verfahren nach Anspruch 1, dadurch gekennzeichnet, daß im ersten Schritt der Durchmesser des einen der mehreren Zirkulationen auf einen in bezug auf den Durchmesser anderer der mehreren Zirkulationen grösseren oder kleineren Durchmesser eingestellt wird und daß im zweiten Schritt das Durchmesserverhältnis zwischen der Zirkulation, deren Durchmesser im ersten Schritt geändert wurde und den anderen der mehreren Zirkulationen umgekehrt wird.

3. Verfahren nach Anspruch 1 oder 2, dadurch gekennzeichnet, daß im ersten Schritt die Luftflußmenge und der Luftflußwinkel der einen der mehreren Zirkulationen in einer ersten Richtung und die Luftflußmenge und der Luftflußwinkel einer benachbarten Zirkulation der mehreren Zirkulationen in umgekehrter Richtung geändert wird und daß im zweiten Schritt das Verhältnis bezüglich der Luftflußmenge und des Luftflußwinkels zwischen den im ersten Schritt beinflußten Zirkulationen umgekehrt wird.

4. Klimatisierungsvorrichtung, die in einem zu klimatisierenden Raum mehrere kontinuierlich aneinander anstoßende Luftzirkulationen ausbildet, die durch an vorbestimmten und voneinander verschiedenen Positionen innerhalb des Raumes angebrachte Luftauslässe ausgeblasen werden, gekennzeichnet durch

– erste Mittel (23, 24, 27) zum Ändern des Durchmessers zumindest einer der mehreren Zirkulationen unter Beibehaltung des kontinuierlichen Aneinanderstoßens der mehreren Zirkulationen und zum Wiedereinstellen des Durchmessers der zumindest einen der mehreren Zirkulationen auf den ursprünglichen Wert sowie durch

– zweite Mittel (22) zum Verursachen einer Wiederholung der Maßnahmen der ersten Mittel.

5. Klimatisierungsvorrichtung nach Anspruch 4, gekennzeichnet durch

– dritte Mittel (22a) zum Ändern der Luftflußmenge und des Luftflußwinkels zumindest einer der mehreren Zirkulationen und zum Ändern der Luftflußmenge und des Luftflußwinkels einer benachbarten der mehreren Zirkulationen in eine Richtung, die der Änderungsrichtung der ersten der mehreren Zirkulationen entgegengesetzt ist sowie durch

– vierte Mittel, um die zwischen den benachbarten Zirkulationen herrschenden Verhältnisse, die durch die dritten Mittel beeinflußt wurden, umzukehren.

**Revendications**

1. Procédé de climatisation qui, dans un espace à climatiser, forme une pluralité de courants d'air circulant en se heurtant de façon continue, respectivement expulsés à travers des sorties d'air d'un système de climatisation disposées à des emplacements séparés prédéterminés dans ledit espace, caractérisé en ce qu'il comporte

– une première étape consistant à modifier le diamètre d'au moins un courant de ladite pluralité de courants circulants tout en conservant les collisions continues de ladite pluralité de courants circulants, et

– une seconde étape consistant à rétablir ledit au moins un courant de ladite pluralité de courants circulants, modifié durant la première étape, à son diamètre existant avant ladite première étape, ladite première étape et ladite seconde étape se répétant successivement.

2. procédé selon la revendication 1, caractérisé en ce que, pendant ladite première étape, le diamètre d'un courant de ladite pluralité de courants circulants est modifié pour devenir plus grand ou plus petit que le diamètre d'autres courants de ladite pluralité de courants circulants, et en ce que, pendant ladite seconde étape, les relations de diamètre entre ledit courant circulant de diamètre modifié pendant ladite première étape et les autres de ladite pluralité de courants circulants sont inversées.

3. procédé selon la revendication 1 ou 2, caractérisé en ce que, pendant ladite première étape, le débit d'air et l'angle d'écoulement d'air d'un courant de ladite pluralité de courants circulants sont modifiés dans un premier sens, et le débit d'air et l'angle d'écoulement d'air d'un courant de ladite pluralité de courants circulants, situé au voisinage immédiat, sont modifiés en sens contraire, et en ce que, pendant ladite seconde étape, les relations de débit d'air et l'angle d'écoulement d'air entre lesdits courants circulants modifiés par ladite première étape sont inversées.

4. Système de climatisation qui, dans un espace à climatiser, forme une pluralité de courants d'air circulant en se heurtant de façon continue, respectivement expulsés à travers des sorties d'air disposées à des emplacement séparés prédéterminés dans ledit espace, caractérisé par

– un premier moyen (23, 24, 27) pour modifier le diamètre d'au moins un courant de ladite pluralité de courants circulants tout en conservant les collisions continues de ladite pluralité de courants circulants, et pour rétablir ledit au moins un courant de ladite pluralité de courants circulants, dont le diamètre a été modifié, à son diamètre existant avant ladite modification, et

– un second moyen (22) pour effectuer des répétitions des effets dudit premier moyen.

5. Système de climatisation selon la revendication 4, caractérisé par

– un troisième moyen pour modifier le débit d'air et l'angle d'écoulement d'au moins un courant de ladite pluralité de courants circulants, et pour modifier le débit d'air et l'angle d'écoulement d'air d'un courant de ladite pluralité de courants circulants, situé au voisinage immédiat, dans le sens contraire de celui de la modification pour ledit courant de ladite pluralité de courants circulants, et

– un quatrième moyen pour inverser lesdites relations établies par ledit troisième moyen entre lesdits courants circulants situés au voisinage immédiat les uns des autres.

FIG. 1

(a)

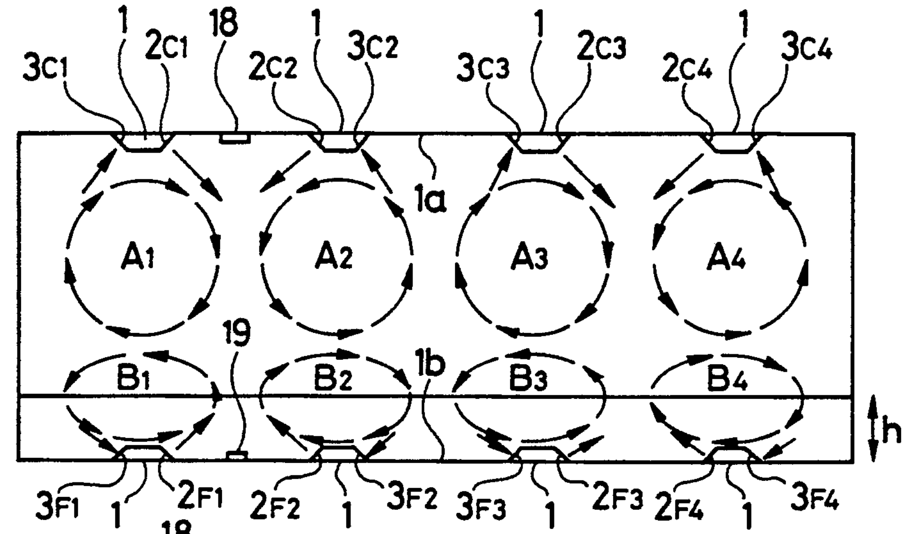
1
2C1
18
1
3C1
2C2
3C2
1
2C3
3C3
1
2C4
3C4
1a
A1
A2
A3
A4
19
1b
B1
B2
B3
B4
h
3F1
1
2F1
2F2
1
3F2
3F3
1
2F3
2F4
1
3F4

(b)

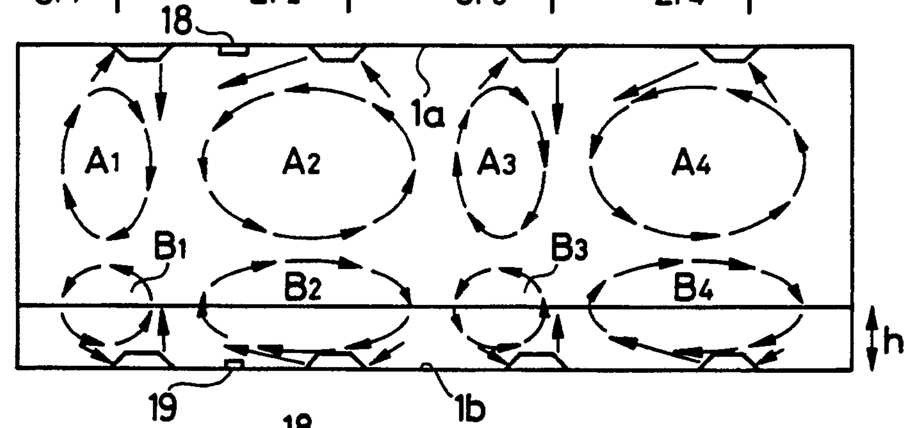
18
1a
A1
A2
A3
A4
B1
B3
B2
B4
h
19
1b

(c)

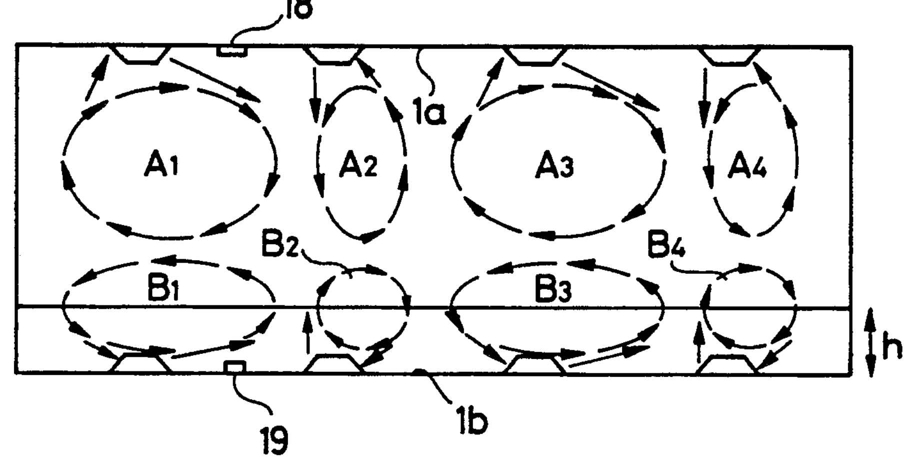
18
1a
A1
A2
A3
A4
B2
B4
B1
B3
h
19
1b

FIG. 2

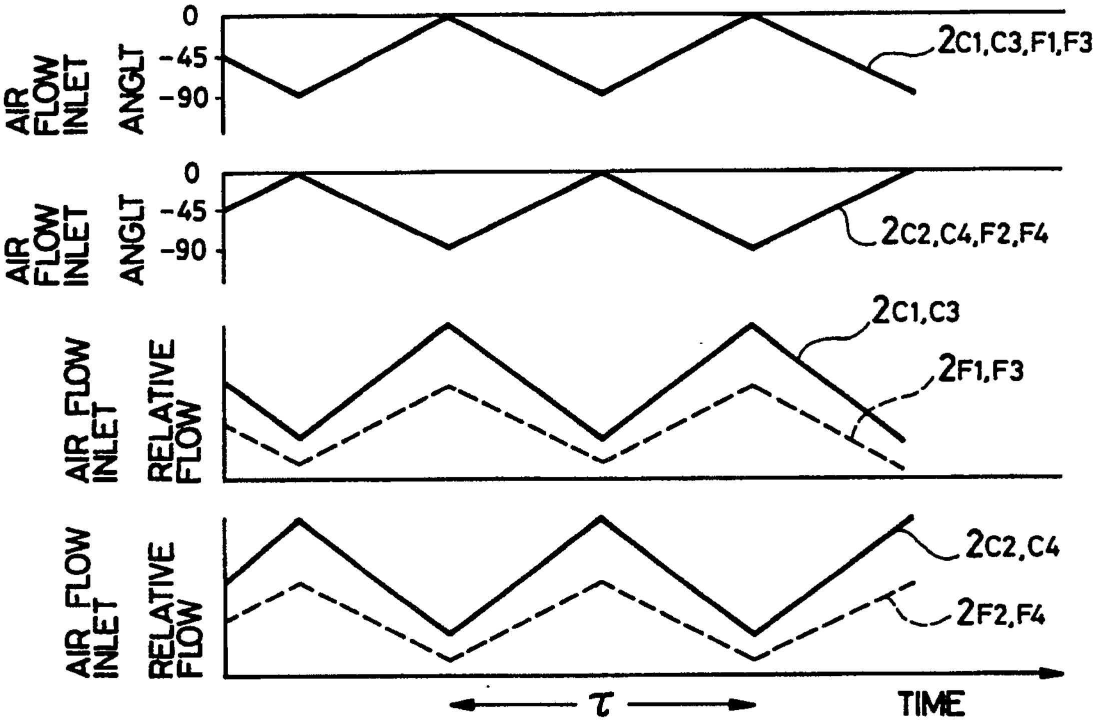
AIR FLOW INLET ANGLT
0
-45
-90
2C1,C3,F1,F3
AIR FLOW INLET ANGLT
0
-45
-90
2C2,C4,F2,F4
AIR FLOW INLET RELATIVE FLOW
2C1,C3
2F1,F3
AIR FLOW INLET RELATIVE FLOW
2C2,C4
2F2,F4
τ
TIME

FIG. 3

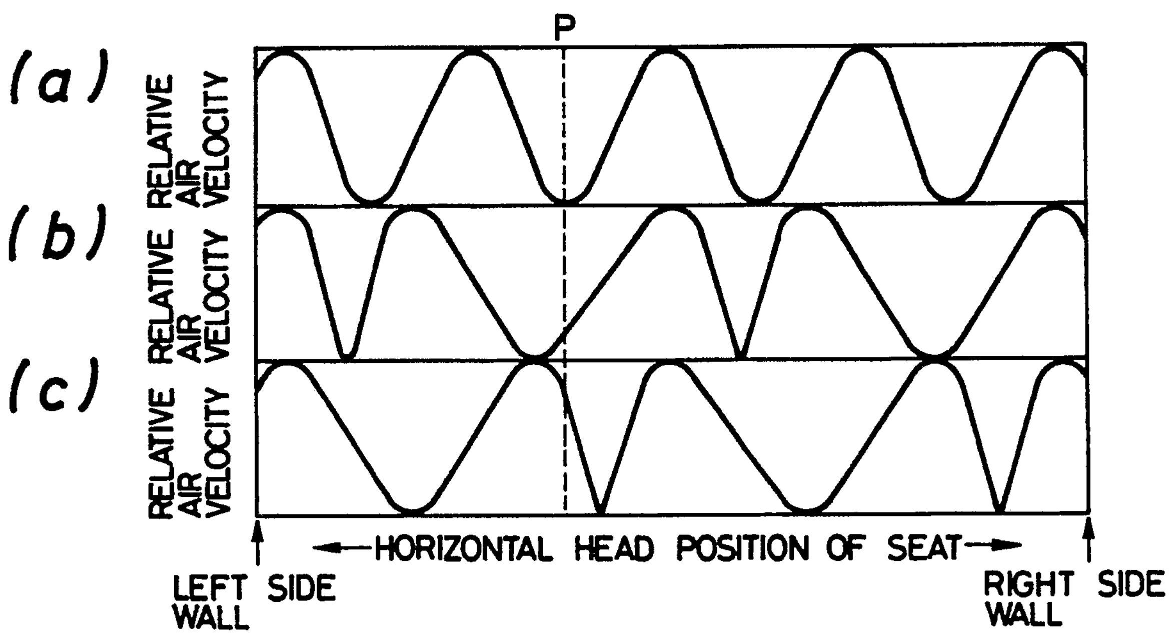
P
(a) RELATIVE AIR VELOCITY
(b) RELATIVE AIR VELOCITY
(c) RELATIVE AIR VELOCITY
HORIZONTAL HEAD POSITION OF SEAT
LEFT SIDE WALL
RIGHT SIDE WALL

FIG. 4

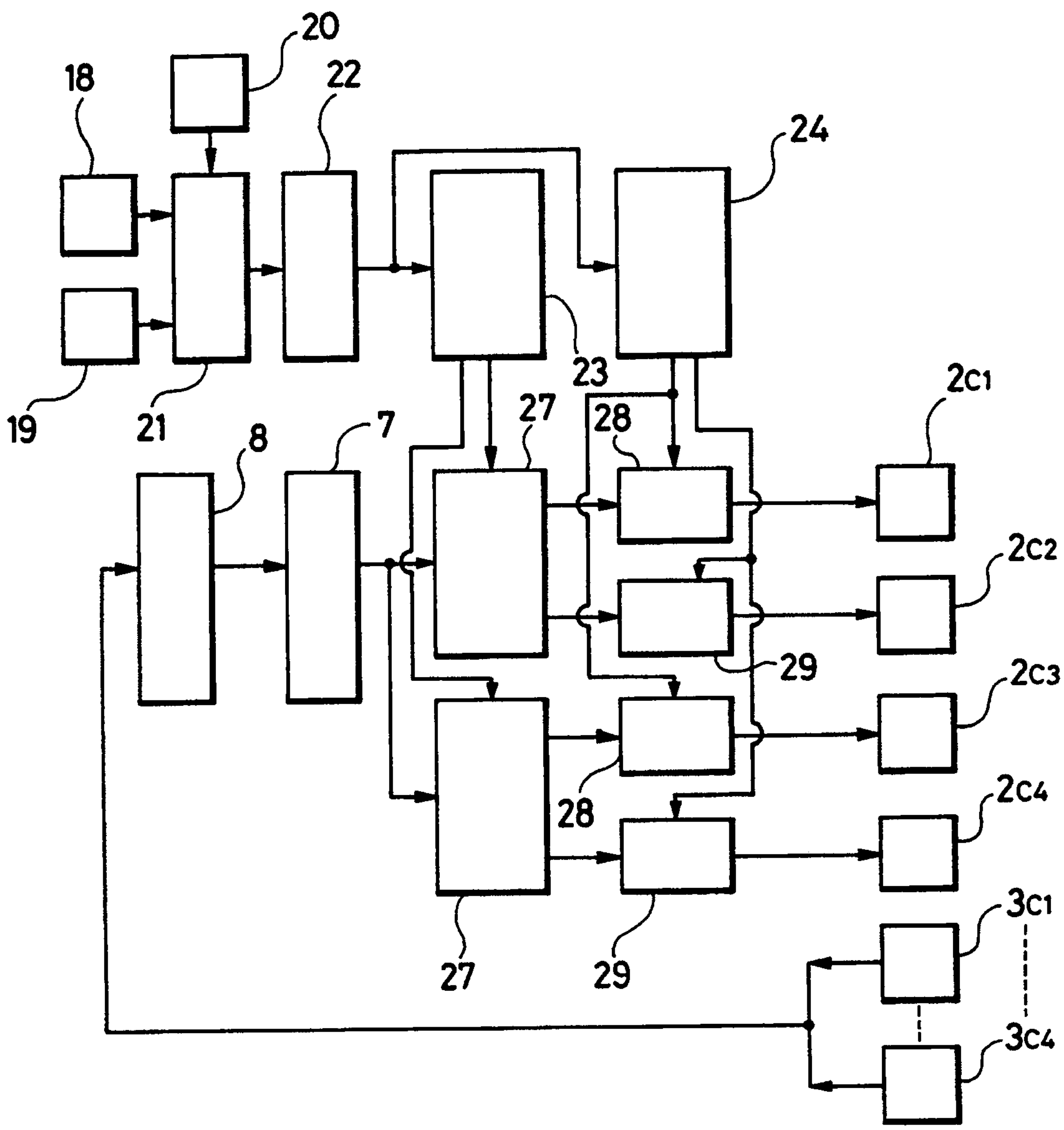

FIG. 5

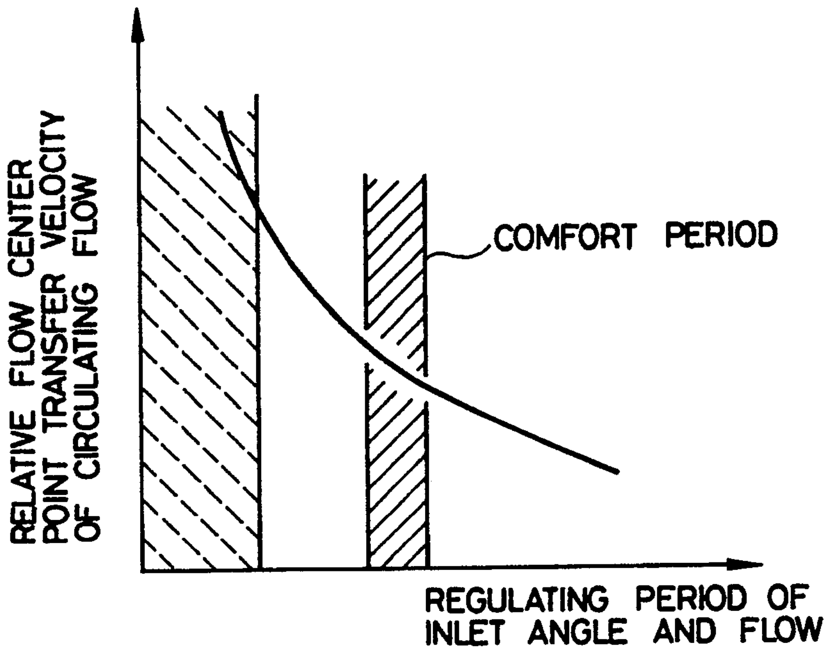
RELATIVE FLOW CENTER POINT TRANSFER VELOCITY OF CIRCULATING FLOW
COMFORT PERIOD
REGULATING PERIOD OF INLET ANGLE AND FLOW

FIG. 6

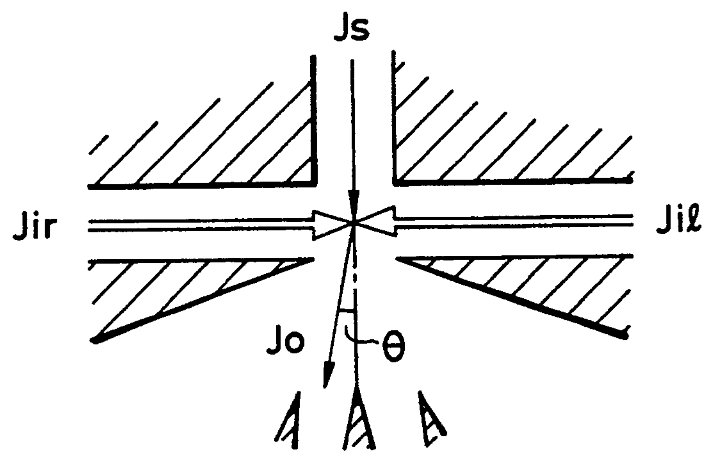
Js
Jir
Jiℓ
Jo
θ

FIG. 7

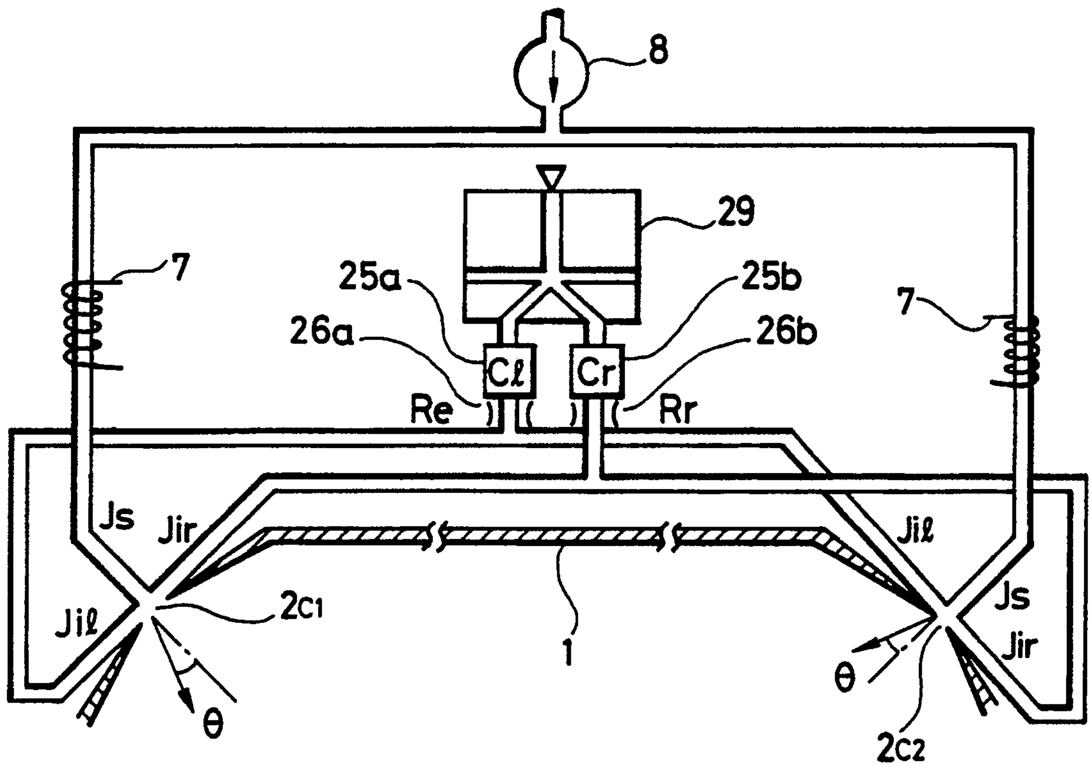
8
29
7
25a
25b
7
26a
26b
Cℓ
Cr
Re
Rr
Js
Jir
Jiℓ
Jiℓ
2c1
1
Js
Jir
θ
θ
2c2

FIG. 8

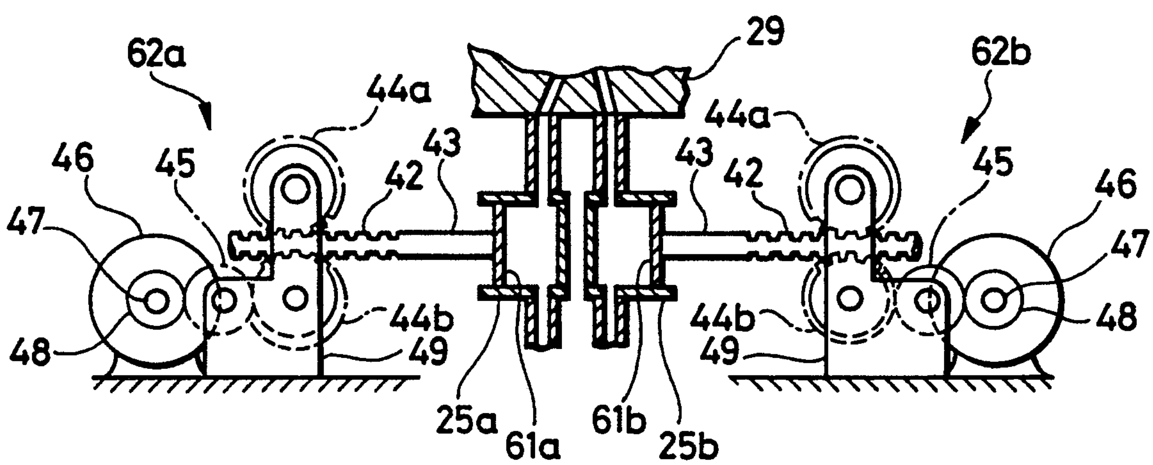
29
62a
62b
44a
44a
46
45
43
42
43
42
45
46
47
47
44b
44b
48
48
49
49
25a
61a
61b
25b

FIG. 9

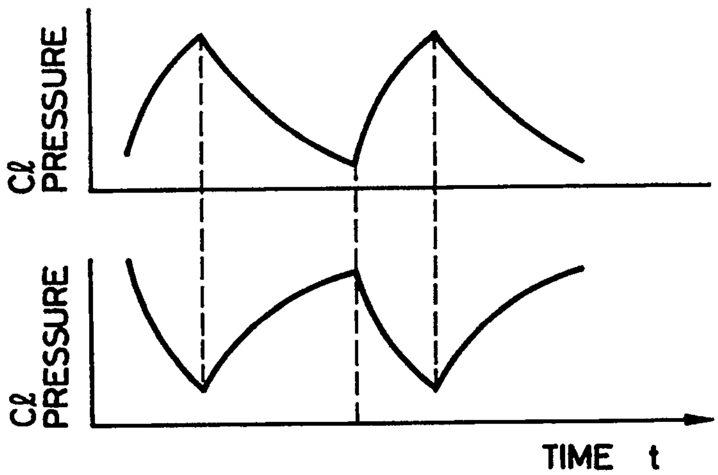
Cl PRESSURE
Cl PRESSURE
TIME t

FIG. 10

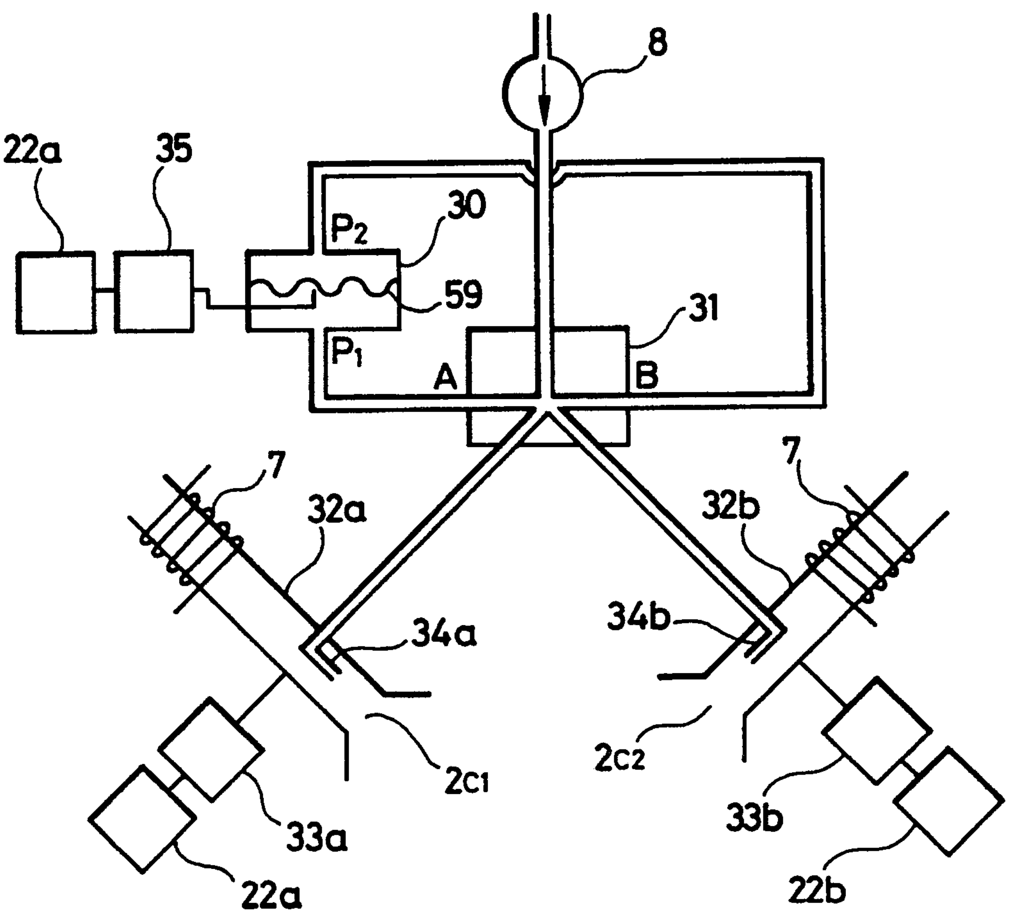
8
22a
35
30
P2
59
31
P1
A
B
7
32a
32b
7
34a
34b
2c1
2c2
33a
33b
22a
22b

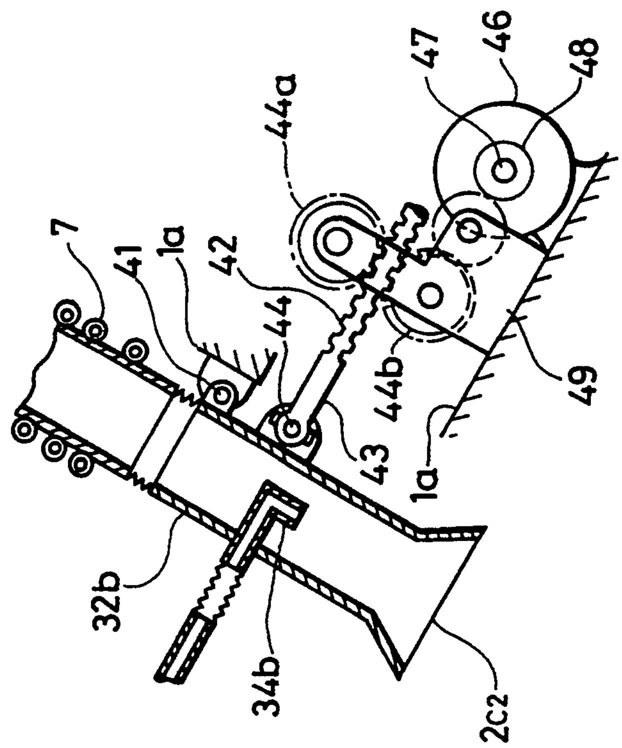
7
41
1a
42
44
44a
47
46
48
44b
49
43
1a
32b
34b
2c2

FIG. 11

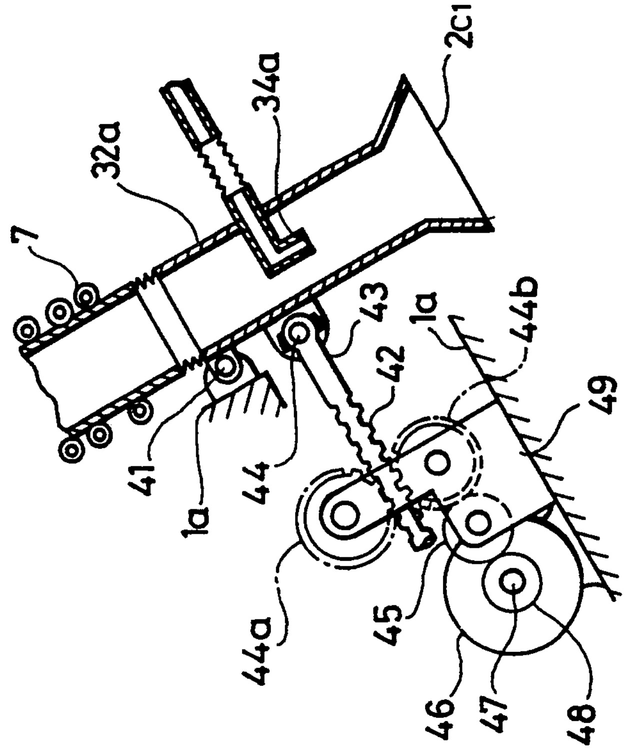
7
32a
34a
2c1
43
1a
44b
49
42
41
1a
44
44a
45
46
47
48

FIG. 12

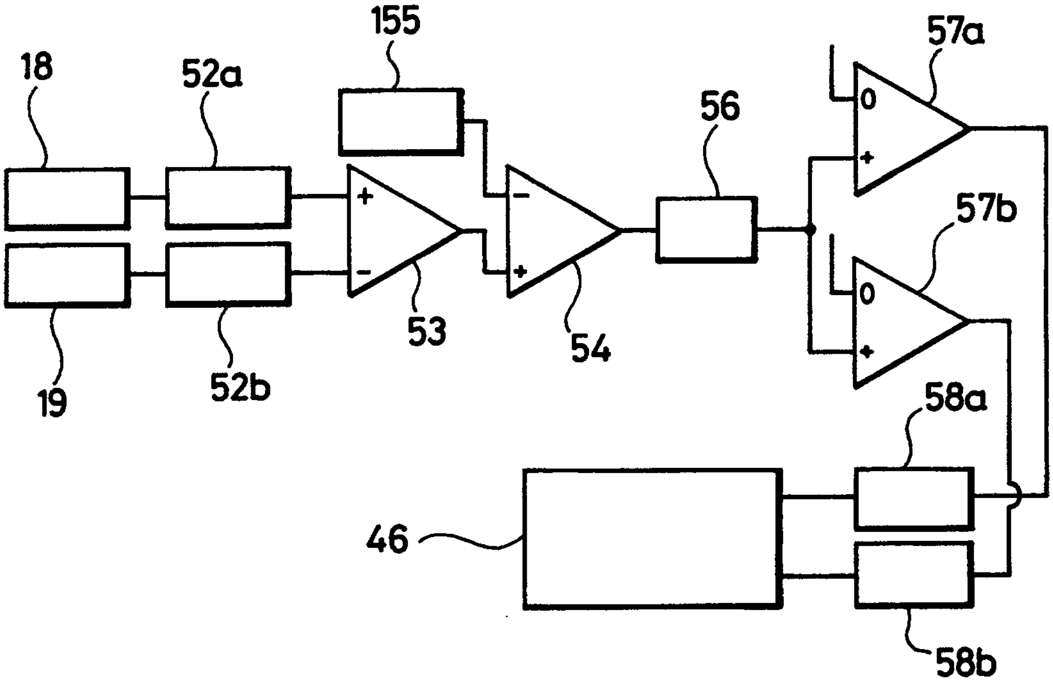

FIG. 13

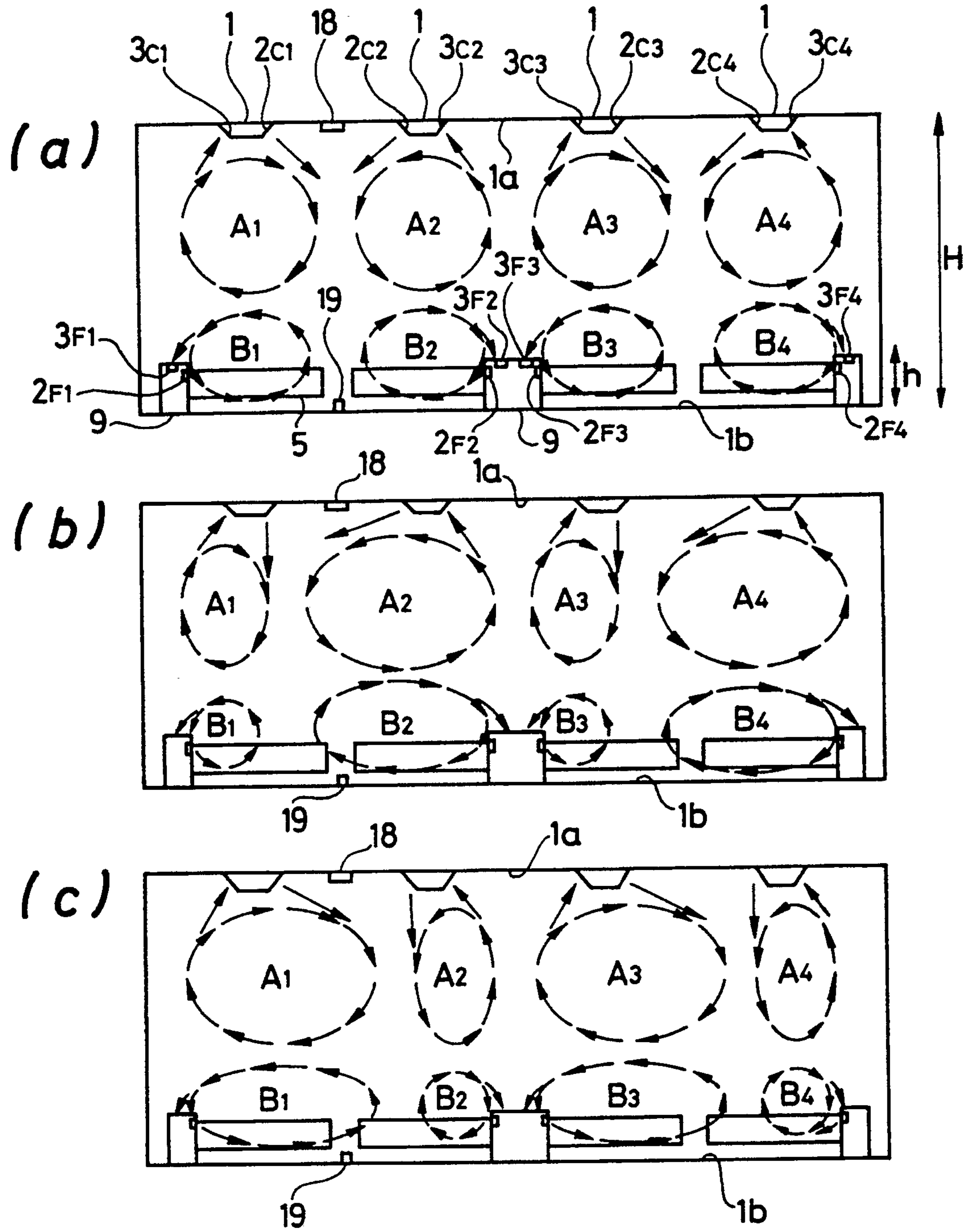
(a)
1
18
3C1
2C1
2C2
3C2
3C3
2C3
2C4
3C4
1a
A1
A2
A3
A4
H
3F3
3F2
3F4
19
3F1
B1
B2
B3
B4
h
2F1
9
5
2F2
9
2F3
1b
2F4
(b)
18
1a
A1
A2
A3
A4
B1
B2
B3
B4
19
1b
(c)
18
1a
A1
A2
A3
A4
B1
B2
B3
B4
19
1b

FIG. 14

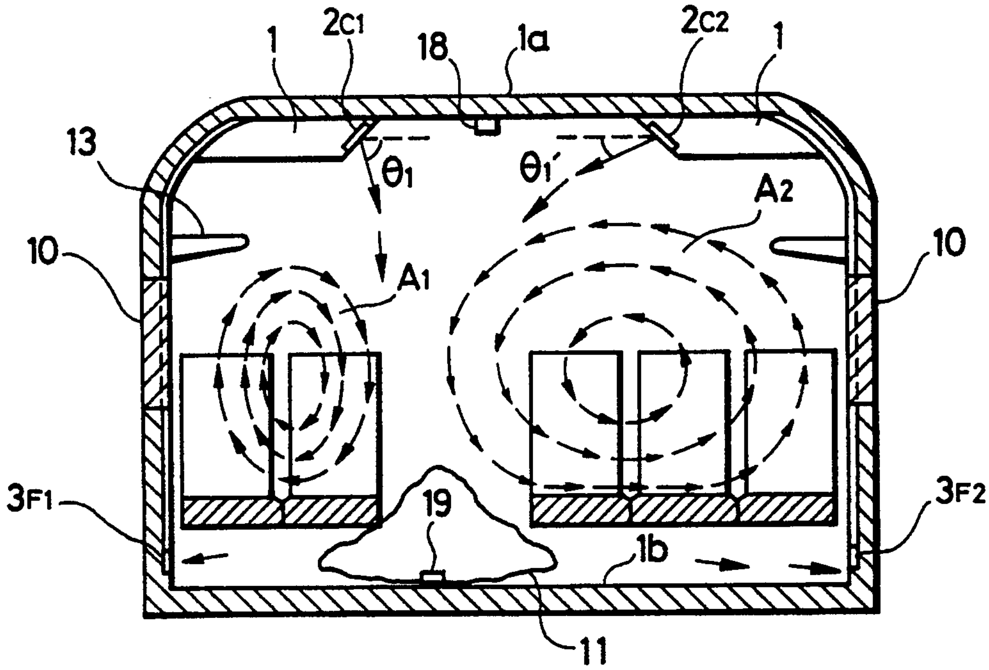
1
2C1
18
1a
2C2
1
13
θ1
θ1'
A2
10
10
A1
3F1
19
3F2
1b
11

FIG. 15

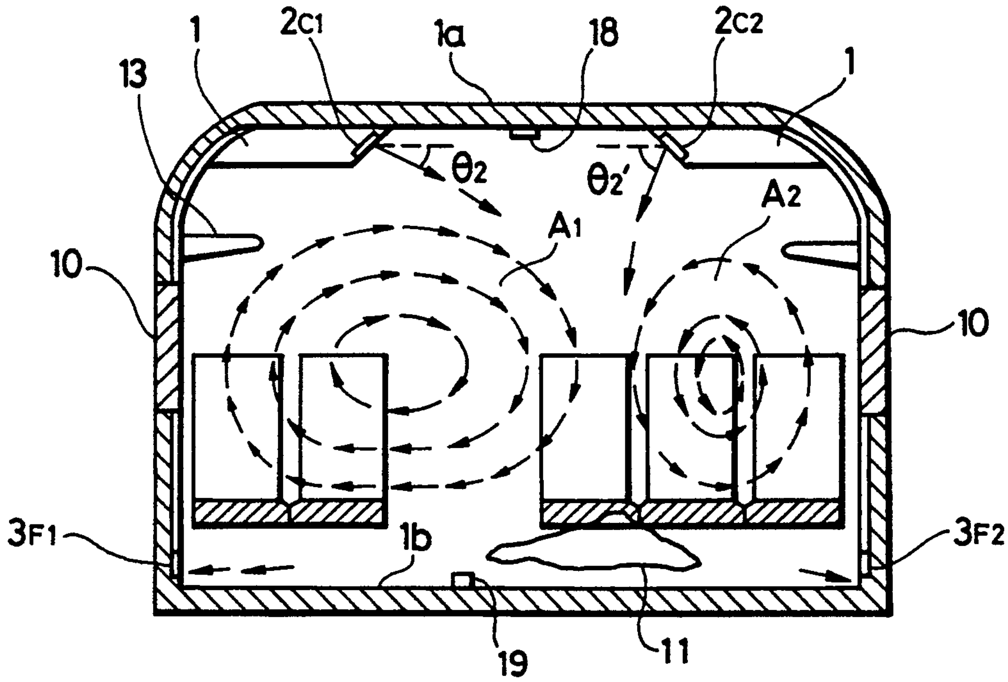
1
2C1
1a
18
2C2
13
1
θ2
θ2'
A2
A1
10
10
3F1
1b
3F2
19
11

FIG. 16

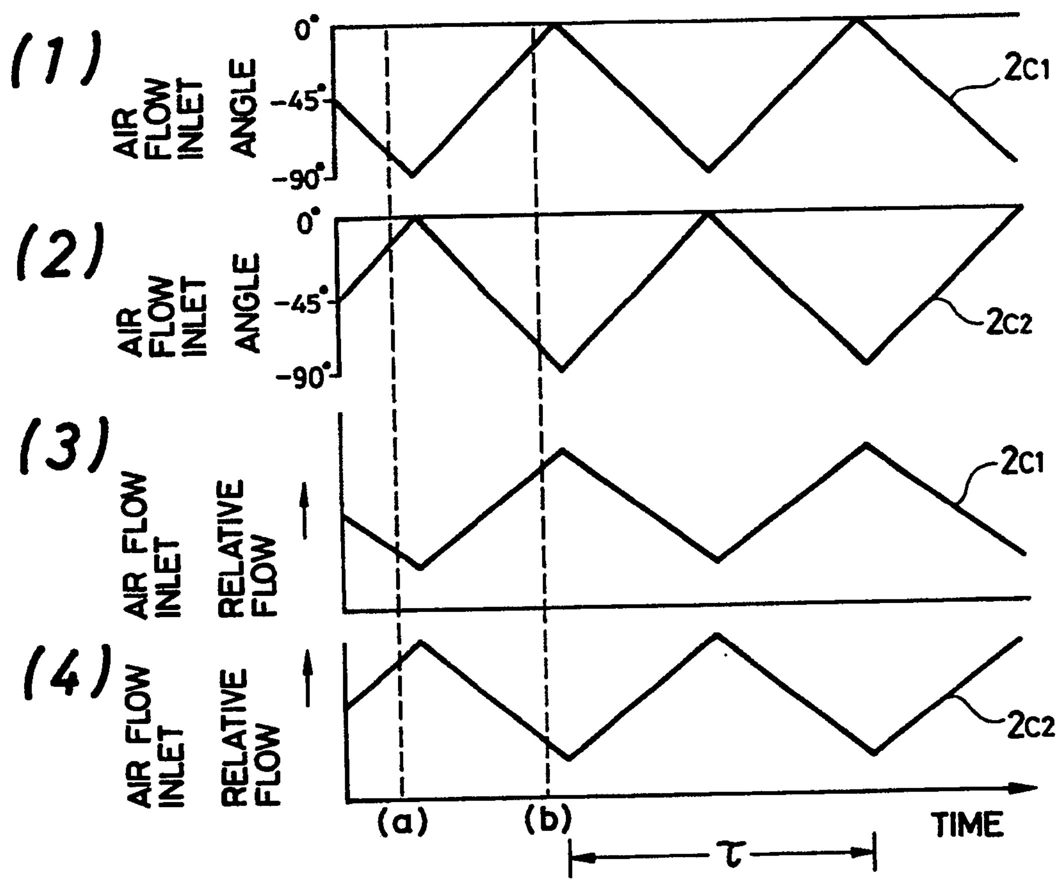
(1)
AIR FLOW INLET ANGLE
0°
-45°
-90°
2C1
(2)
AIR FLOW INLET ANGLE
0°
-45°
-90°
2C2
(3)
AIR FLOW INLET RELATIVE FLOW
2C1
(4)
AIR FLOW INLET RELATIVE FLOW
2C2
(a)
(b)
TIME
τ

FIG. 17

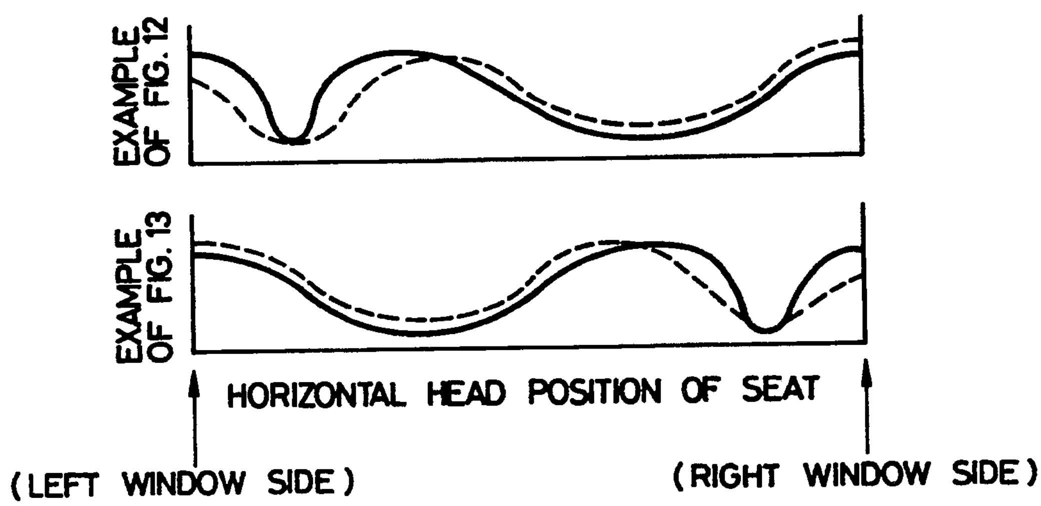
EXAMPLE OF FIG. 12
EXAMPLE OF FIG. 13
HORIZONTAL HEAD POSITION OF SEAT
(LEFT WINDOW SIDE)
(RIGHT WINDOW SIDE)